# EUROPÄISCHE PATENTSCHRIFT

(11) **EP 1 866 686 B1**
(45) Veröffentlichungstag und Bekanntmachung des Hinweises auf die Patenterteilung: **27.08.2008**
(21) Anmeldenummer: 06723781.8
(22) Anmeldetag: 28.03.2006
(51) Int. Cl.: G02B 6/38

(54) **OPTISCHE DATENÜBERTRAGUNGSKABELSTECKERVERBINDUNG MIT FAKRA-GEHÄUSE**
OPTICAL DATA TRANSMISSION CABLE PLUG CONNECTION WITH FAKRA HOUSING
CABLE DE TRANSMISSION DE DONNEES POURVU D'UN BOITIER DE CONNEXION OPTIQUE DE TYPE FAKRA

(30) Priorität: 05.04.2005 DE 202005005362 U
(43) Veröffentlichungstag der Anmeldung: 19.12.2007
(73) Patentinhaber: Rosenberger Hochfrequenztechnik GmbH & Co. KG, 83413 Fridolfing (DE)
(72) Erfinder: ROSENBERGER, Bernd, 84529 Tittmoning (DE); WURSTER, Clemens, 86167 Augsburg (DE)
(74) Vertreter: Kandlbinder, Markus Christian
(86) Internationale Anmeldenummer: PCT/EP2006/002811
(87) Internationale Veröffentlichungsnummer: WO 2006/105896

(56) Entgegenhaltungen:
- EP-A- 0 053 914
- DE-A1- 4 221 040
- US-A- 4 691 985
- US-A- 4 707 063
- US-A- 4 733 936
- US-A1- 2003 176 104
- PATENT ABSTRACTS OF JAPAN Bd. 010, Nr. 380 (P-528), 19. Dezember 1986 (1986-12-19) -& JP 61 169804 A (NIPPON TELEGR & TELEPH CORP <NTT>; others: 04), 31. Juli 1986 (1986-07-31)

## Beschreibung

Die vorliegende Erfindung betrifft ein Datenübertragungskabel, insbesondere für Kraftfahrzeuge, an dessen wenigstens einem Ende ein Kunststoffgehäuse angeordnet ist, welches in seinem Interfacebereich mechanische Abmessungen aufweist, die dem FAKRA-Standardisierungsschema, insbesondere für SMB-Verbindungen, entsprechen, gemäß dem Oberbegriff des Anspruchs 1.

Aus der US 2003/0176104 A1 ist ein Koaxialsteckverbinder mit einem Kunststoffgehäuse bekannt, welcher dem sog. FAKRA-Standardisierungsschema (FAKRA = Fachkreis Automobiltechnik) für SMB-Verbindungen entspricht. Hierbei ist ein Kunststoffgehäuse vorgesehen, welches den Steckverbinder hält, schützt und für den Steckvorgang mit einem anderen Steckverbinder mit Kunststoffgehäuse vorpositioniert. Das Gehäuse weist zusätzlich mechanische Kodierungen auf, so dass nur zusammenpassende Gehäuse ineinander gesteckt werden können.

Derartige Kunststoffgehäuse für Koaxialsteckverbinder, welche auch FAKRA-Gehäuse genannt werden, finden in der Automobiltechnik Anwendung für Datenübertragungskabel. Diese Datenübertragungskabel sind üblicherweise Koaxialkabel oder ähnliche auf einem elektrischen Leiter basierende Kabel. Die mechanischen Abmessungen derartiger FAKRA-Gehäuse im Interface-Bereich, d.h. in einem axialen Abschnitt des Gehäuses, welcher mit einem komplementären Stecker zusammenwirkt, um eine mechanische Verbindung zwischen beiden Kunststoffgehäusen herzustellen, sind in der DIN-Norm 72594-1 in der Fassung vom Oktober 2004 festgelegt. Der Teil "Straßenfahrzeuge - 50-Ohm-Hochfrequenz-Schnittstelle (50-Ω-HFSSt) - Teil 1: Maße und elektrische Anforderungen" der o.g. DIN-Norm 72594-1 legt Stecker und Kuppler einer Schnittstelle mit einer Impedanz von 50 Ohm für Hochfrequenz-Anwendungen (50-Ω-HFSSt) in Straßenfahrzeugen fest und stellt so die Kommunikation zum und vom Kfz sicher. Er legt maßliche und elektrische Anforderungen und Eigenschaften fest und sichert deren Austauschbarkeit. Alle namhaften Autohersteller fertigen nach dieser Norm. Der Inhalt dieser Norm wird von dem Normenausschuss Kraftfahrzeuge (FAKRA) festgelegt.

Der Normenausschuss Kraftfahrzeuge (FAKRA) im DIN vertritt die regionalen, nationalen und internationalen Normungsinteressen auf dem Gebiet des Kraftfahrzeugwesens. Das Aufgabengebiet des FAKRA umfasst die Erstellung von allen Normen bezüglich Vereinbarkeit, Austauschbarkeit und Sicherheit für Straßenfahrzeuge nach DIN 70010 (ausgenommen Ackerschlepper), unabhängig davon, ob diese Straßenfahrzeuge mit Verbrennungsmotoren, Elektromotoren oder Hybridantrieben ausgerüstet sind. Auch für die Aufbauten dieser Straßenfahrzeuge (ausgenommen Kommunal-, Feuerwehrfahrzeuge und Krankenkraftwagen) erstellt der FAKRA Normen. Ferner ist er zuständig für die Normung der gesamten Ausrüstung vorstehend genannter Fahrzeuge und Aufbauten sowie für die Normung der Frachtcontainer (ISO-Container). Die Normung fördert Rationalisierung und Qualitätssicherung im Kraftfahrzeugbau sowie die Umweltverträglichkeit des Kraftfahrzeugs. Außerdem trägt sie dem aktuellen Stand von Technik und Wissenschaft entsprechend zur Erhöhung der Fahrzeug- und Verkehrssicherheit bei, zum Nutzen der Hersteller und Verbraucher.

DE-A1-4221040 beschreibt eine Lichtwellenleiterkopplung, im wesentlichen bestehend aus Steckerbuchse, Linsenkörpern, Hülsen und Lichtwellenleitern.

Der Erfindung liegt die Aufgabe zugrunde, ein Datenübertragungskabel der o.g. Art bezüglich der Datenübertragung zu verbessern und gleichzeitig die Herstellungskosten zu vermindern.

Diese Aufgabe wird erfindungsgemäß durch ein Datenübertragungskabel der o.g. Art mit den in Anspruch 1 gekennzeichneten Merkmalen gelöst. Vorteilhafte Ausgestaltungen der Erfindung sind in den weiteren Ansprüchen beschrieben.

Bei einem Datenübertragungskabel der o.g. Art ist es erfindungsgemäß vorgesehen, dass es einen Lichtwellenleiter aufweist, wobei in dem Kunststoffgehäuse ein Halterungsteil vorgesehen ist, welches zum Halten eines optischen Abbildungselementes und zum Verbinden des optischen Abbildungselementes mit dem Lichtwellenleiter ausgebildet ist.

Dies hat den Vorteil, dass beispielsweise für den Automobilbereich ein kostengünstiger und den typischen thermischen und mechanischen Belastungen im Bereich von Kraftfahrzeugen widerstehender Steckverbinder für Lichtwellenleiter zur Verfügung steht. Gleichzeitig ermöglicht die Datenübertragung mittels Lichtwellen eine wesentlich reduzierte Störanfälligkeit bezüglich Einstrahlung von äußeren elektromagnetischen Wellen (EMV-Festigkeit), da die Daten nicht mehr, wie bei herkömmlichen Datenübertragungskabeln, mittels im Kabel geführter elektromagnetischer Wellen in HF-Bereich, sondern mittels Licht, d.h. elektromagnetischer Wellen in einem vollkommen anderen Frequenzbereich übertragen werden.

Zweckmäßigerweise ist das optische Abbildungselement eine optische Linse.

Dadurch, dass das Halterungsteil derart in dem Kunststoffgehäuse angeordnet ist, dass das daran gehaltene optische Abbildungselement in eingestecktem Zustand des Kunststoffgehäuses in ein komplementäres Kunststoffgehäuse einen vorbestimmten axialen Abstand von dem optischen Abbildungselement in dem komplementären Kunststoffgehäuse aufweist, sind mechanische Spannungen oder Kräfte beim Zusammenstecken zweier Kunststoffgehäuse wirksam vermieden, wobei gleichzeitig eine gute optische Kopplung gewährleistet ist.

Zum optimierten relativen Ausrichten von zwei optischen Abbildungselementen zweier ineinander gesteckter Kunststoffgehäuse ist zusätzlich eine Kupplungshülse vorgesehen, welche derart angeordnet und ausgebildet ist, dass sie zwei optische Abbildungselemente von zwei ineinander gesteckten Kunststoffgehäusen in einer Bohrung axial führt. Zum axialen Haltern in dem Kunststoffgehäuse weist die Kupplungshülse Mittel zum Zusammenwirken mit einer Primärsicherung des Kunststoffgehäuses auf.

Zum axialen Haltern der Anordnung aus Lichtwellenleiter, Halterungsteil und optischem Abbildungselement in dem Kunststoffgehäuse weist das Halterungsteil Mittel zum Zusammenwirken mit einer Primärsicherung des Kunststoffgehäuses auf.

In einer bevorzugten Ausführungsform ist das Halterungsteil und/oder das optische Abbildungselement aus Polykarbonat hergestellt.

In einer besonders bevorzugten Ausführungsform sind das optische Abbildungselement und das Halterungsteil einstückig, insbesondere als Spritzgussteil aus einem einzigen Werkstoff, ausgebildet.

Das Kunststoffgehäuse ist beispielsweise ein Stecker oder eine Kupplung.

In einer bevorzugten Ausführungsform weist das Kunststoffgehäuse in seinem Interfacebereich mechanische Abmessungen auf, die gemäß der DIN-Norm 72594-1:2004-10, "Straßenfahrzeuge - 50-Ohm-Hochfrequenz-Schnittstelle (50-Ω-HFSSt) - Teil 1: Maße und elektrische Anforderungen", Abschnitt "3. Maße und Kodierung", Bilder 1 bis 3 ausgebildet sind.

Bevorzugt weist das Kunststoffgehäuse in seinem Interfacebereich eine mechanische Kodierung mit mechanischen Abmessungen auf, die gemäß der DIN-Norm 72594-1:2004-10, "Straßenfahrzeuge - 50-Ohm-Hochfrequenz-Schnittstelle (50-Ω-HFSSt) - Teil 1: Maße und elektrische Anforderungen", Abschnitt "3. Maße und Kodierung", Bilder 4 und 5 ausgebildet sind.

Die Erfindung wird im Folgenden anhand der Zeichnung näher erläutert. Diese zeigt in:
- Fig. 1: eine bevorzugte Ausführungsform eines erfindungsgemäßen Datenübertragungskabels mit einem FAKRA-Gehäuse in Form eines Steckers in perspektivischer Ansicht,
- Fig. 2: eine alternative bevorzugte Ausführungsform eines erfindungsgemäßen Datenübertragungskabels mit einem FAKRA-Gehäuse in Form einer Kupplung in perspektivischer Ansicht und
- Fig. 3: den Stecker gemäß Fig. 1 sowie die Kupplung gemäß Fig. 2 in zusammen gesteckten Zustand im Schnitt.

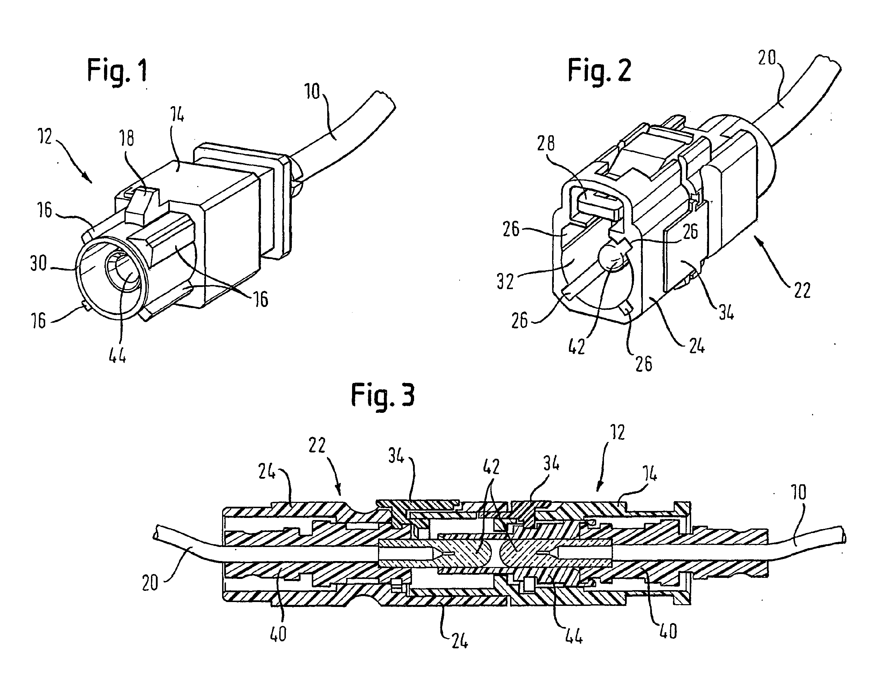

Das aus Fig. 1 ersichtliche Datenübertragungskabel 10 ist als Lichtwellenleiter ausgebildet und weist an einem Ende einen Steckverbinder in Form eines Steckers 12 mit FAKRA-Steckergehäuse 14 auf. Das FAKRA-Steckergehäuse 14 ist als Kunststoffgehäuse ausgebildet und weist in seinem Interface-Bereich 30 radiale Erhebungen 16 und einen Rasthaken 18 auf. Die radialen Erhebungen 16 sind bezüglich ihrer Breite in Umfangsrichtung und ihrer Höhe in radialer Richtung teilweise unterschiedlich ausgebildet.

Auch das Datenübertragungskabel 20 gemäß Fig. 2 ist als Lichtwellenleiter ausgebildet und weist an einem Ende einen Steckverbinder in Form eines Kupplers 22 mit FAKRA-Kupplergehäuse 24 auf. Das FAKRA-Kupplergehäuse 24 ist als Kunststoffgehäuse ausgebildet und weist in seinem Interface-Bereich 32 radiale Ausnehmungen 26 und einen Rastmechanismus 28 auf. Die Ausnehmungen 26 sind derart angeordnet und ausgebildet, das sie bezüglich Breite in Umfangsrichtung und Tiefe in radialer Richtung jeweils zu einer der radialen Erhebungen 16 des FAKRA-Steckergehäuses 14 passen, so dass nur dieses FAKRA-Steckergehäuse 14 nur in einer ganz bestimmten Position in axialer Richtung in das FAKRA-Kupplergehäuse 24 einsteckbar ist. Es handelt sich hierbei um eine mechanische Kodierung. Zusätzlich ist der Rastmechanismus 28 derart angeordnet und ausgebildet, dass in der vorbestimmten Einsteckposition der Rasthaken 18 des FAKRA-Steckergehäuses 14 in den Bereich des Rastmechanismus 28 des FAKRA-Kupplergehäuses 24 gelangt, sodass der Rastmechanismus 28 an dem Rasthaken 18 einrastet und eine mechanische Verriegelung zur Verfügung stellt, die ein axiales Auseinanderziehen von Stecker 12 und Kuppler 22 verhindert.

Der Ausdruck " Interface-Bereich" bezeichnet hierin einen axialen Abschnitt des FAKRA-Gehäuses 14 oder 24, welcher mit dem komplementären FAKRA-Gehäuse 24 oder 14 zusammenwirkt, um eine mechanische Verbindung zwischen Stecker und Kuppler herzustellen. Bei dem FAKRA-Steckergehäuse 14 ist dieser Interface-Bereich als zylinderförmiger Abschnitt 30 mit außen liegenden radialen Erhebungen ausgebildet. Bei dem FAKRA-Kupplergehäuse 24 ist dieser Interface-Bereich mit einer axialen Bohrung 32 ausgebildet, in der die radialen Ausnehmungen 26 ausgebildet sind. Der Innendurchmesser der axialen Bohrung 32 des FAKRA-Kupplergehäuses 24 bzw. der Außendurchmesser des zylinderförmigern Abschnitts 30 des FAKRA-Steckergehäuses 14 sind dabei derart gewählt, dass der zylinderförmige Abschnitt 30 des FAKRA-Steckergehäuses 14 in die axiale Bohrung 32 des FAKRA-Kupplergehäuse 24 passt und einsteckbar ist.

Gemäß dem FAKRA-Standard (DIN 72594-1:2004-10) sind sowohl das FAKRA-Steckergehäuse 14 als auch das FAKRA-Kupplergehäuse 24 mit einer Primärsicherung 34 ausgebildet (Fig. 3). Diese Primärsicherung 34 dient dazu, entsprechende Bauteile des Steckverbinders, welche innerhalb des Gehäuses 14 bzw. 24 angeordnet werden, gegen Bewegung in axialer Richtung relativ zum Gehäuse und ggf. gegen Rotation relativ zum Gehäuse 14 bzw. 24 zu sichern.

Fig. 3 veranschaulicht den Zustand; in dem Stecker 12 und Kuppler 22 ineinander gesteckt sind. Weiterhin ist aus Fig. 3 ersichtlich, dass das Datenübertragungskabel 10 bzw. 20 über ein Halterungsteil 40 jeweils mit einem optischen Abbildungselement 42 in Form einer Linse verbunden ist. Das Halterungsteil 40 ist dabei derart ausgebildet, dass es im Kuppler 22 mit der Primärsicherung 34 zusammenwirkt, so dass eine eingerastete Primärsicherung 34 das Halterungsteil 40 innerhalb des FAKRA-Kupplergehäuses 24 festlegt. Das Halterungsteil 40 hält die jeweilige Linse 42 in einer vorbestimmten Position innerhalb des FAKRA-Gehäuses 14 bzw. 24 und stellt gleichzeitig eine optische Verbindung zwischen der Linse 42 und dem jeweiligen Lichtwellenleiter 10 bzw. 20 her.

In dem FAKRA-Steckergehäuse 14 ist zusätzlich eine Kupplungshülse 44 vorgesehen, die an einem steckseitigen Ende des Halterungsteiles 40 befestigt ist. Die Kupplungshülse 44 ist derart ausgebildet, dass sie mit der Primärsicherung 34 des FAKRA-Steckergehäuses 14 zusammenwirkt, so dass bei eingerasteter Primärsicherung des FAKRA-Steckergehäuses 14 die Kupplungshülse 44 und mit dieser zusammen das an der Kupplungshülse 44 befestigte Halterungsteil 40 innerhalb des FAKRA-Steckergehäuses 14 festgelegt sind. Die Kupplungshülse 44 weist eine axiale Durchgangsbohrung auf, die derart ausgebildet ist, das sie die über das Halterungsteil 40 hinaus stehenden Enden der jeweiligen Linsen 42 aufnimmt und in axialer Richtung möglichst exakt zueinander ausrichtet, so dass axiale Längsachsen der Linsen 42 so weit bzw. genau wie möglich miteinander fluchten. Dies schafft eine gute optische Kopplung zwischen den beiden Linsen 42 des Steckers 12 bzw. des Kupplers 22 für eine möglichst verlustfreie Übertragung des optischen Signals zwischen den beiden Linsen 42.

Wie aus Fig. 3 unmittelbar ersichtlich, bleibt zwischen den beiden Linsen 42 auch bei vollständig ineinander gesteckten Stecker 12 und Kuppler 22 ein axialer Spalt bestehen. Dies hat den Vorteil, dass beim Zusammenstecken von Stecker 12 und Kuppler 22 keine axialen Kräfte auf die optischen Abbildungselement 42 bzw. Halterungsteile 40 bzw. Lichtwellenleiter 10, 20 wirken. Andererseits ist es für das die Daten bzw. Informationen übertragende Licht innerhalb des Lichtwellenleiters problemlos möglich, diesen Spalt ohne größere Verluste zu überwinden. Die optischen Abbildungselemente in Form der Linsen 42 bündeln dazu das von dem Lichtwellenleiter 10 bzw. 20 kommende Licht, so dass es den Spalt besser und verlustfreier überwinden kann.

Das optische Abbildungselement 42 ist beispielsweise aus Polycarbonat hergestellt. Besonders bevorzugt ist es weiterhin, dass das optische Abbildungselement 42 und das Halterungsteil 40 einstückig miteinander ausgebildet sind. Beispielsweise sind das optische Abbildungselement 42 und das Halterungsteil 40 als einstückiges Spritzgussteil, insbesondere aus Polycarbonat, hergestellt.

Der Interfacebereich 30, 32 ist bezüglich seiner mechanischen Abmessungen gemäß der DIN-Norm 72594-1:2004-10 (Fassung vom Oktober 2004), "Straßenfahrzeuge - 50-Ohm-Hochfrequenz-Schnittstelle (50-Ω-HFSSt) - Teil 1: Maße und elektrische Anforderungen", Abschnitt "3. Maße und Kodierung", Bilder 1 bis 3 ausgebildet. Die mechanischen Abmessungen der mechanischen Kodierung entsprechen beispielsweise den Angaben gemäß dem o.g. Teil 1 der DIN-Norm 72594-1:2004-10 in Bildern 4 und 5, sind jedoch nicht auf diese beschränkt.

## Patentansprüche

1. Datenübertragungskabel, insbesondere für Kraftfahrzeuge, an dessen wenigstens einem Ende ein Kunststoffgehäuse (14; 24) angeordnet ist, welches in seinem Interfacebereich (30; 32) mechanische Abmessungen aufweist, die dem FAKRA-Standardisierungsschema für 50-Ω-HFSSt entsprechen,
**dadurch gekennzeichnet,**
**dass** das Datenübertragungskabel (10; 20) einen Lichtwellenleiter aufweist und dass in dem Kunststoffgehäuse (14; 24) ein Halterungsteil (40) vorgesehen ist, das zum Halten eines optischen Abbildungselementes (42) in Form einer Linse sowie zu dessen Verbinden mit dem Lichtwellenleiter ausgebildet und derart in dem Kunststoffgehäuse (14; 24) angeordnet ist, dass das daran gehaltene optische Abbildungselement (42) in eingestecktem Zustand des Kunststoffgehäuses (14; 24) in ein komplementäres Kunststoffgehäuse (24; 14) einen vorbestimmten axialen Abstand zu dem optischen Abbildungselement (42) in dem komplementären Kunststoffgehäuse (24; 14) aufweist.

2. Datenübertragungskabel Anspruch 1, **dadurch gekennzeichnet, dass** zusätzlich eine Kupplungshülse (44) vorgesehen ist, welche derart angeordnet und ausgebildet ist, dass sie zwei optische Abbildungselemente (42) von zwei ineinander gesteckten Kunststoffgehäusen (14; 24) in einer Bohrung axial führt.

3. Datenübertragungskabel nach Anspruch 2, **dadurch gekennzeichnet, dass** die Kupplungshülse (44) und/oder das Halterungsteil (40) Mittel zum Zusammenwirken mit einer Primärsicherung (34) des Kunststoffgehäuses (14; 24) aufweisen.

4. Datenübertragungskabel nach einem der vorhergehenden Ansprüche, **dadurch gekennzeichnet, dass** das Halterungsteil (40) und/oder das optische Abbildungselement (42) aus Polykarbonat hergestellt ist.

5. Datenübertragungskabel nach einem der vorhergehenden Ansprüche, **dadurch gekennzeichnet, dass** das Halterungsteil (40) und das optische Abbildungselement (42) einstückig, insbesondere als Spritzgussteil aus einem einzigen Werkstoff, ausgebildet sind.

6. Datenübertragungskabel nach einem der vorhergehenden Ansprüche, **dadurch gekennzeichnet, dass** das Kunststoffgehäuse (14; 24) ein Stecker (14) oder eine Kupplung (24) ist.

7. Datenübertragungskabel nach einem der vorhergehenden Ansprüche, **dadurch gekennzeichnet, dass** das Kunststoffgehäuse (14; 24) in seinem Interfacebereich (30; 32) mechanische Abmessungen aufweist, die gemäß der DIN-Norm 72594-1:2004-10, "Straßenfahrzeuge - 50-Ohm-Hochfrequenz-Schnittstelle (50-Ω-HFSSt) - Teil 1: Maße und elektrische Anforderungen", Abschnitt "3. Maße und Kodierung", Bilder 1 bis 3 ausgebildet sind.

8. Datenübertragungskabel nach einem der vorhergehenden Ansprüche, **dadurch gekennzeichnet, dass** das Kunststoffgehäuse (14; 24) in seinem Interfacebereich (30; 32) eine mechanische Kodierung mit mechanischen Abmessungen aufweist, die gemäß der DIN-Norm 72594-1:2004-10, "Straßenfahrzeuge - 50-Ohm-Hochfrequenz-Schnittstelle (50-Ω-HFSSt) - Teil 1: Maße und elektrische Anforderungen", Abschnitt "3. Maße und Kodierung", Bilder 4 und 5 ausgebildet sind.

## Claims

1. Data transmission cable, in particular for motor vehicles, arranged at least at one end of which is a plastics housing (14; 24) which has mechanical dimensions in its interface region (30; 32) which comply with the FAKRA standardisation scheme for 50-Ω-HFSSt, **characterised in that** the data transmission cable (10; 20) has an optical waveguide and that a holder part (40) is provided which is configured for holding an optical imaging element (42) in the form of a lens and for connecting said optical imaging element to the optical waveguide and is arranged in the plastics housing (14; 24) such that, in the plugged-in condition of the plastics housing (14; 24), the optical imaging element (42) held thereon has a predetermined axial separation from the optical imaging element (42) in the complementary plastics housing (24; 14).

2. Data transmission cable according to claim 1, **characterised in that** a coupling sleeve (44) is also provided which is arranged and configured such that it guides two optical imaging elements (42) from two mutually plugged plastics housings (14; 24) axially in a bore.

3. Data transmission cable according to claim 2, **characterised in that** the coupling sleeve (44) and/or the holder part (40) have means for cooperating with a primary securing device (34) of the plastics housing (14; 24).

4. Data transmission cable according to one of the preceding claims, **characterised in that** the holder part (40) and/or the optical imaging element (42) are made from polycarbonate.

5. Data transmission cable according to one of the preceding claims, **characterised in that** the holder part (40) and the optical imaging element (42) are configured in one part, in particular as an injection moulded part, made from a single material.

6. Data transmission cable according to one of the preceding claims, **characterised in that** the plastics housing (14; 24) is a plug (14) or a coupling (24).

7. Data transmission cable according to one of the preceding claims, **characterised in that** the plastics housing (14; 24) has mechanical dimensions in its interface region (30; 32) which are configured according to the DIN norm 72594-1:2004-10, "Road vehicles - 50-Ohm-high frequency interface (50-Ω-HFSSt)-Part 1: Dimensions and electrical requirements", section "3. Dimensions and coding", figures 1 to 3.

8. Data transmission cable according to one of the preceding claims, **characterised in that** the plastics housing (14; 24) has in its interface region (30; 32) a mechanical coding with mechanical dimensions which are configured according to the DIN norm 72594-1:2004-10, "Road vehicles - 50-Ohm-high frequency interface (50-Ω-HFSSt)-Part 1: Dimensions and electrical requirements", section "3. Dimensions and coding", figures 4 and 5.

## Revendications

1. Câble de transmission de données, en particulier pour véhicules automobiles, avec un boîtier en matière plastique (14 ; 24) agencé à l'une au moins des extrémités du câble et présentant dans sa zone interface (30 ; 32) des dimensions mécaniques qui correspondent aux schémas de standardisation FAKRA pour 50-Ω-HFSSt,
**caractérisé en ce que**
le câble de transmission de données (10 ; 20) comprend un guide d'ondes lumineuses, et **en ce que** dans le boîtier en matière plastique (14 ; 24) est prévue une partie de maintien (40) qui est réalisée pour le maintien d'un élément d'imagerie optique (42) sous forme d'une lentille, ainsi que pour sa jonction avec le guide d'ondes lumineuses, et qui est agencée dans le boîtier en matière plastique (14 ; 24) de telle manière que l'élément d'imagerie optique (42) maintenu sur celle-ci présente, dans la situation enfichée du boîtier en matière plastique (14 ; 24) dans un boîtier en matière plastique complémentaire (24 ; 14), une distance axiale prédéterminée par rapport à l'élément d'imagerie optique (42) dans le boîtier en matière plastique complémentaire (24 ; 14).

2. Câble de transmission de données selon la revendication 1, **caractérisé en ce qu'**il est prévu en supplément une douille d'accouplement (44) qui est agencée et réalisée de telle façon qu'elle guide axialement dans un perçage deux éléments d'imagerie optique (42) de deux boîtiers en matière plastique (14 ; 24) enfichés l'un dans l'autre.

3. Câble de transmission de données selon la revendication 2, **caractérisé en ce que** la douille d'accouplement (44) et/ou la partie de maintien (40) présente des moyens pour coopérer avec un blocage primaire (34) du boîtier en matière plastique (14 ; 24).

4. Câble de transmission de données selon l'une des revendications précédentes, **caractérisé en ce que** la partie de maintien (40) et/ou l'élément d'imagerie optique (42) est fabriqué en polycarbonate.

5. Câble de transmission de données selon l'une des revendications précédentes, **caractérisé en ce que** la partie de maintien (40) et l'élément d'imagerie optique (42) sont réalisés d'un seul tenant, en particulier sous forme de pièce coulée par injection à partir d'un matériau unique.

6. Câble de transmission de données selon l'une des revendications précédentes, **caractérisé en ce que** le boîtier en matière plastique (14 ; 24) est un élément mâle (14) ou femelle (24).

7. Câble de transmission de données selon l'une des revendications précédentes, **caractérisé en ce que** le boîtier en matière plastique (14 ; 24) présente dans sa zone interface (30 ; 32) des dimensions mécaniques qui sont définies d'après la norme DIN 72594-1:2004-10, "Straßenfahrzeuge - 50-Ohm-Hochfrequenz-Schittstelle (50-Ω-HFSSt) - Teil 1 : Maße und elektrische Anforderungen, Abschnitt 3. Maße und Kodierung"*, illustrations 1 à 3.
* "Véhicules automobiles, interface 50 ohms à haute fréquence, 1^{ère} Partie : Dimensions et prescriptions électriques, Chapitre 3 : Dimensions et codage"

8. Câble de transmission de données selon l'une des revendications précédentes, **caractérisé en ce que** le boîtier en matière plastique (14 ; 24) présente dans sa zone interface (30 ; 32) un codage mécanique avec des dimensions mécaniques qui sont définies d'après la norme DIN 72594-1:2004-10, "Straßenfahrzeuge - 50-Ohm-Hochfrequenz-Schittstelle (50-Ω-HFSSt) - Teil 1 : Maße und elektrische Anforderungen, Abschnitt 3. Maße und Kodierung"*, illustrations 4 et 5.
